# EUROPÄISCHE PATENTSCHRIFT

(11) **EP 2 067 671 B1**
(45) Veröffentlichungstag und Bekanntmachung des Hinweises auf die Patenterteilung: **12.03.2014**
(21) Anmeldenummer: 08010234.6
(22) Anmeldetag: 05.06.2008
(51) Int. Cl.: B60R 22/20

(54) **Führungsschiene für einen Umlenkbeschlag eines Sicherheitsgurtes für Fahrzeuge**
Guide rails for loop-around fittings of a seatbelt for a motor vehicle
Rail de guidage pour une monture de renvoi d'une ceinture de sécurité pour véhicules

(30) Priorität: 03.12.2007 DE 102007058399
(43) Veröffentlichungstag der Anmeldung: 10.06.2009
(73) Patentinhaber: KDK Automotive GmbH, 60308 Frankfurt am Main (DE)
(72) Erfinder: Lohmann, Horst, 59846 Sundern (DE); Schauerte, Andre, 57368 Lennestadt (DE)
(74) Vertreter: Köchling, Conrad-Joachim

(56) Entgegenhaltungen:
- EP-A2- 0 642 957
- DE-A1- 19 822 696
- DE-U1- 9 303 104

## Beschreibung

Die Erfindung betrifft eine Führungsschiene für einen Umlenkbeschlag eines Sicherheitsgurtes für Fahrzeuge, wobei die Führungsschiene mindestens einen Haken oder mindestens ein Paar von Haken aufweist, der oder die von der Führungsschiene abragt oder abragen und zur Verhakung in einer Ausnehmung der Fahrzeugkarosserie dient, wobei der Haken ein Hakenmaul aufweist, in welches in Montagesolllage eine Randkante der Ausnehmung eingreift, wobei der Haken oder die Paare von Haken integraler Bestandteil der Führungsschiene oder ein separat an der Schiene befestigtes Teil ist oder sind sowie als Blechformteil oder - Stanzteil ausgebildet ist oder sind.
Derartige Führungsschienen sind im Stand der Technik vielfach bekannt. Üblicherweise ist eine solche Führungsschiene vertikal im Fahrzeuginnenraum befestigt. Sie weist einen längs der Schiene verstellbaren Schlitten auf, der in unterschiedlichen Positionen arretierbar ist und der eine Umlenköse für einen Sicherheitsgurt trägt. Solche Schienen werden üblicherweise als Profilschienen aus Stahl gefertigt, wobei U-profilartige Schiene oder C-profilartige Schienen üblich sind. Die Schiene ist in der Fahrzeugkarosserie üblicherweise derart befestigt, dass im oberen Endbereich eine Schraube durch die Schienenbasis geführt und an der Karosserie befestigt wird, während im unteren Endbereich und/oder auch in Zwischenbereichen an der Schiene Haken vorgesehen sind, mit denen die Schiene in entsprechenden Lochungen der Karosseriestruktur verhakbar ist.

Eine Führungsschiene dieser Bauweise ist beispielsweise aus der DE 299 12 874 U1 bekannt. Hierbei ist am unteren Ende der Schiene ein Hakenpaar vorgesehen, wobei die Haken aus dem Schienenmaterial ausgestanzt und nach unten abgebogen sind, so dass sie von der Unterseite der Schiene abragen.

Aus der DE 20 2005 013 543 U1 ist eine andere Führungsschiene bekannt, bei der die Führungsschiene selbst keine Haken aufweist, sondern die Schiene ist als U-Profil oder C-Profil ausgebildet. Die Haken sind durch ein zusätzliches Teil aus Blechmaterial gebildet, welches U-förmig ausgebildet ist, so dass die Schenkel entsprechende Haken mit Hakenmäulern bilden. Dieses Element ist in die Schiene eingesetzt und mit der Schiene in geeigneter Weise verbunden.

Die bisher übliche Bauart hat einen Mangel, dem es zu beheben gilt. Bei einer crashbedingten Belastung, die über den Sicherheitsgurt in die Führungsschiene eingeleitet wird, treten erhebliche Zugbelastungen auf, die auch auf die mit Hakenmäulern versehenen Haken einwirken, so dass die freien Enden der Haken sich verbiegen können oder abscheren können, so dass die Kraftübertragung in das Rohbaublech in der Karosserie nicht mehr gegeben ist und sich die Führungsschiene von der Karosseriestruktur löst.

Aus der DE 9303 104 U1 ist es bekannt, den Haltehaken in einem die Querstege übergreifenden Bereich mit einem Schalldämpfungsmaterial zu belegen oder mit solchem zu ummanteln.

Ausgehend von diesem Stand der Technik liegt der Erfindung die Aufgabe zugrunde, eine Führungsschiene gattungsgemäßer Art zu schaffen, die im Crashfall höheren Belastungen widerstehen kann und mit hoher Sicherheit ein Verbiegen oder Abscheren der Haken vermeidet.

Zur Lösung dieser Aufgabe schlägt die Erfindung vor, dass dass das Hakenmaul an seinem mit der Randkante der Ausnehmung in Eingriff befindlichen Rand gegenüber der Materialstärke des Hakens verbreitert ist, wobei die Verbeiterung durch das Material des Hakens selbst gebildet ist, indem der Bereich des Randes des Hakenmaules zu einer Verbreiterung in diesem Bereich verformt ist.

Erfindungsgemäß ist das Blechmaterial des

Bleches, aus dem der Haken besteht, im Bereich der Randkante des Hakenmaules zumindest in Teilbereichen verbreitert. Im Wesentlichen sind dies mindestens die Teilbereiche, die mit der Randkante der Ausnehmung der Karosserie in Berührung kommen, wenn die Schiene montiert ist und/oder die Schiene im Crashfall extrem belastet wird. Durch die Verbreiterung des Randes des Hakenmaules ist ein Verbiegen und Abscheren des Hakens bei Zugbelastung durch die Kraftübertragung in das Rohbaublech weitestgehend vermieden.

Die Verbreiterung wird durch das Material des Hakens selbst gebildet, indem der Bereich des Randes des Hakenmaules entsprechend verformt wird, sodass eine Verbreiterung in diesem Bereich gebildet ist.

Obwohl eine Ausbildung des Hakenmaules in etwa V-förmiger Art möglich ist und auch dabei durch die entsprechende Verbreiterung eine Verbesserung erzielt wird, ist vorzugsweise vorgesehen, dass das Hakenmaul etwa U-förmig ausgebildet ist, wobei ein erster Schenkel der U-Form in die Führungsschiene übergeht und ein zweiter Schenkel der U-Form von der Führungsschiene beabstandet frei auslaufend endet.

Durch die U-Form des Hakenmaules wird eine gerundete Angriffsfläche für das mit dem Haken wirk verbundene Karosserieblech gebildet, so dass Kerbwirkungen und das Einreißen des Hakens vermieden sind. Die Randkanten der Schenkel müssen nicht parallel zueinander gerichtet auslaufen, sondern sie können auch leicht divergieren.

Um die gewünschte Wirkung zu erzielen, ist vorgesehen, dass das Hakenmaul die Verbreiterung an seinem der Schiene beabstandeten Rand, im Übergang zu seinem der Schiene nahe liegenden Rand und mindestens in einem daran anschließenden Teilbereich des der Schiene nahe liegenden Randes aufweist.

Es wird also die Verbreiterung an der Randkante des freien Schenkels des Hakenmauls über die gesamte Länge bis zu seinem vorzugsweise gerundeten Übergang in den zweiten Schenkel vorgesehen, wobei die Verbreiterung auch in einem kurzen anschließenden Bereich des zweiten Schenkels verläuft.

Vorzugsweise ist aber vorgesehen, dass das Hakenmaul an seinem gesamten Innenrand die Verbreiterung aufweist.

Eine besondere Ausbildung wird darin gesehen, dass die Verbreiterung durch eine Abwinklung der Randkante des Hakenmaules gebildet ist, die sich quer zum Hakenmaterial erstreckt.

Hierbei wird lediglich der Blechzuschnitt, aus dem auch der Haken gebildet ist, im Bereich des Hakenmaules etwa größer ausgebildet, als zur Bildung des Hakenmaules erforderlich ist, so dass die über das Sollmaß hinausgehende Materialmenge abgewinkelt werden kann und so die Verbreiterung gebildet ist. Durch eine solche Ausbildung ist der Stanzabfall, der bei der Formung der Führungsschiene bzw. des Hakens anfällt, gegenüber der normalen Herstellung vermindert, wobei keine zusätzliche Menge an Blechmaterial zur Verfügung gestellt werden muss, um die Verbreiterung der Randkante des Hakenmaules zu erzeugen.

Vorzugsweise ist dabei vorgesehen, dass die Abwinklung etwa in Materialstärke des Hakenmaterials über die Seitenfläche des Hakens vorragt.

Es wird somit eine Verbreiterung erreicht, die etwa der doppelten Materialstärke des Hakenmaterials entspricht.

Bevorzugt ist zudem vorgesehen, dass die Abwinklung über die Außenseite des Hakens vorragt.

Üblicherweise sind solche Haken an beiden Längsrandkanten an der Führungsschiene vorgesehen, wobei die Abwinklungen der beiden Haken im Bereich der Hakenmäuler voneinander weg gerichtet sind, also über die Außenseite des Hakens vorragen.

Alternativ kann natürlich auch vorgesehen sein, dass die Abwinklung über die Innenseite des Hakens vorragt.

Eine weitere Alternative wird darin gesehen, dass die Verbreiterung durch einen Umschlag der Randkante des Hakenmauls um 180° gebildet ist.

Hierbei kann der Umschlag sowohl zur Außenseite des Hakens vorgenommen sein als auch zur Innenseite des Hakens.

Schließlich wird eine weitere Alternative darin gesehen, dass die Verbreiterung durch eine Wulst der Randkante des Hakenmauls gebildet ist.

Eine solche Wulst kann beispielsweise an die Randkante des Hakenmauls angestaucht oder in anderer Weise angeformt sein.

Bevorzugt ist dabei vorgesehen, dass die Wulst eine Dicke hat, die gleich der doppelten Materialstärke des Hakenmaterials oder größer als diese ist.

Ein Ausführungsbeispiel der Erfindung ist in der Zeichnung dargestellt und im Folgenden näher beschrieben. Es zeigt:

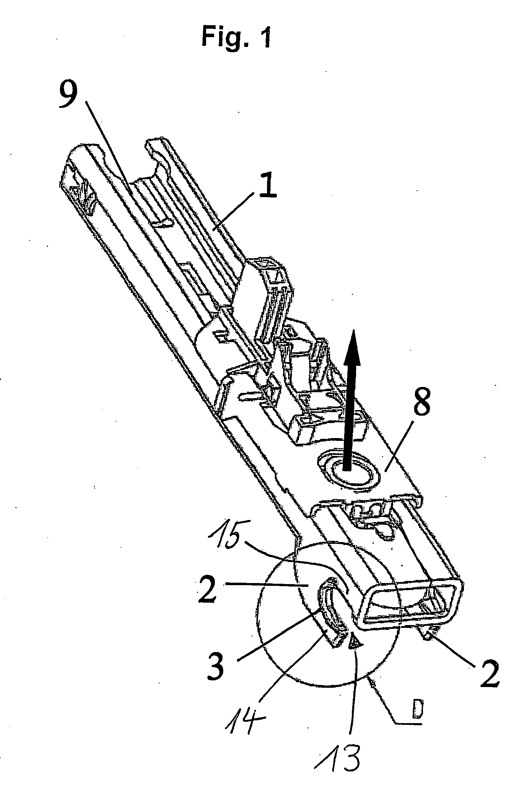

- Figur 1: eine erfindungsgemäße Führungsschiene in Ansicht;
- Figur 2: das Detail D der Figur 1 vergrößerter Darstellung;
- Figur 3: eine erfindungsgemäße Führungsschiene in der Montagesolllage an einer Karosseriestruktur fixiert;
- Figur 4: das Detail E der Figur 3 in vergrößertem Maßstab;
- Figur 5: ein Schnitt analog der Schnittlinie B/B der Figur 4 gesehen;
- Figur 6: das Detail F der Figur 5 in vergrößertem Maßstab als Einzelheit gezeigt;
- Figur 7: eine Variante der Figur 6 in gleicher Ansicht.
In der Zeichnung ist eine Führungsschiene 1 für einen Umlenkbeschlag eines Sicherheitsgurtes für Kraftfahrzeuge gezeigt.

In der im Wesentlichen als C-Profil ausgebildeten Führungsschiene 1 ist ein Verstellschlitten 8 längsverschieblich und stufenweise rastbar angeordnet. Dieser Verstellschlitten 8 haltert die Umlenköse, durch die der Sicherheitsgurt geführt ist. Am in der Einbausituation oberen Ende der Führungsschiene 1 ist in deren Basis eine Lochung 9 vorgesehen, durch die eine Befestigungsschraube geführt werden kann, um die Schiene an der Karosseriestruktur zu verschrauben. Am unteren Ende weist die Führungsschiene 1 jeweils in Verlängerung ihrer Schenkel über die Unterseite der Schiene 1 vorragende Haken 2 auf, die dazu dienen, die Führungsschiene 1 an entsprechenden Ausnehmungen der Karosseriestruktur 4 zu verhaken. Bei der Montage werden zunächst die Haken 2 in die entsprechende Ausnehmung eingeführt, so dass eine Verhakung erfolgt. Anschließend wird die Schiene 1 durch die Schraube fixiert, die durch die Lochung 9 der Schiene 1 geführt ist.

Jeder Haken 2 weist ein Hakenmaul 13 auf, dessen Öffnung zum unteren Ende der Schiene gerichtet ausläuft. Im Ausführungsbeispiel ist der Haken 2 integraler Bestandteil der Führungsschiene 1. Es ist aber auch möglich, die Haken 2 oder Hakenpaare 2 durch zusätzliche Teile an der Schiene anzuordnen und zu befestigen. Die gesamte Führungsschiene 1 samt Haken 2 ist ein aus einem ebenen Blechzuschnitt umgeformtes Blechformteil bzw. Blechstanzteil.

Um eine höhere Stabilität gegen Verbiegen und Abscheren der Haken 2 im Crashzustand zu erreichen, ist das Hakenmaul 13 an einem mit der Randkante der Ausnehmung der Karosseriestruktur 4 in Eingriff befindlichen Rand gegenüber der Materialstärke des Hakens 2 verbreitert. Diese Verbreiterung ist in der Zeichnung mit 3 bezeichnet.

Im Ausführungsbeispiel ist das Hakenmaul 13 etwa U-förmig ausgebildet, wobei ein erster Schenkel 15 der U-Form in die Führungsschiene 1, insbesondere in deren Schenkel, übergeht, während ein zweiter Schenkel 14 der U-Form von der Führungsschiene 1 beabstandet ist und frei auslaufend endet.

Das Hakenmaul 13 weist die Verbreiterung 3 in seinem der Führungsschiene 1 beabstandeten Rand, also am Innenrand des Schenkels 14, auf, wobei die Verbreiterung 3 bis in den gerundeten Übergang am Ende des Hakenmaules verläuft und von dort über einen Teil des der Schiene nahe liegenden Randes, also des Schenkels 15.

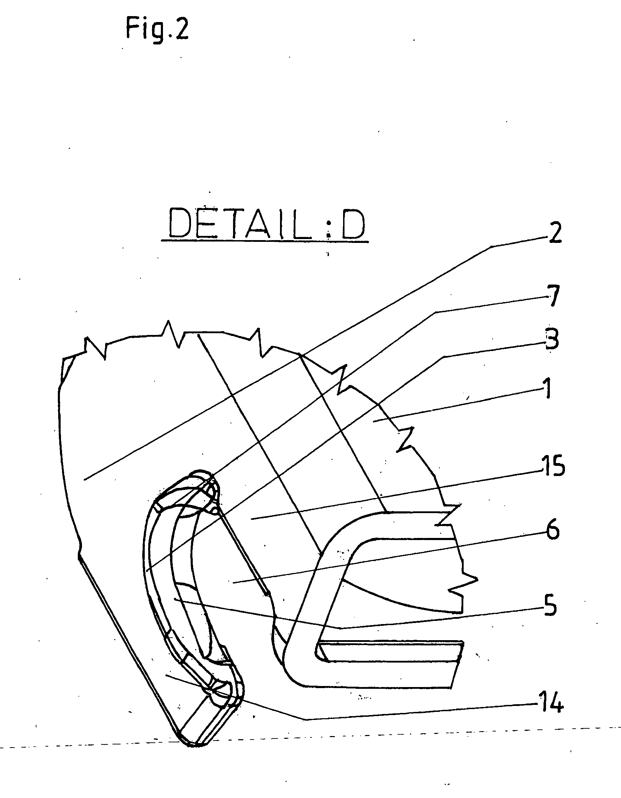

Anders als in der Zeichnung gezeigt, könnte das Hakenmaul 13 auch an seinem gesamten Innenrand die entsprechende Verbreiterung 3 aufweisen. Die entsprechende Struktur und Anordnung der Verbreiterung 3 ist besonders gut in Figur 2 ersichtlich. Dabei ist der Freiraum 6, der dem Hakenmaul 13 entspricht, die Freistanzung im Haken 2. Bei 7 ist der Radius am hinteren Ende des Hakenmaules angegeben, während bei 5 die Angriffsfläche gezeigt ist, an der die Randkante des Ausschnittes des Karosseriebleches eingreift, an welchem die Führungsschiene 1 verhakt ist.

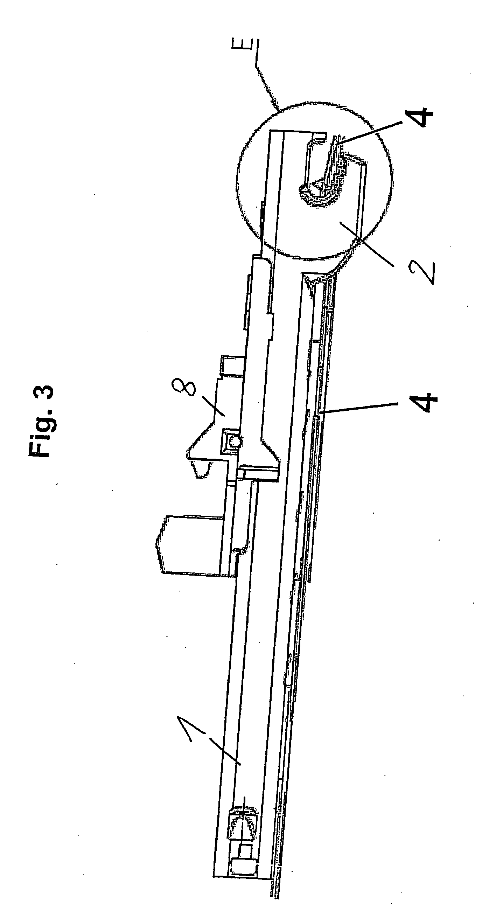

In Figur 3 ist die Montagesolllage gezeigt, bei der der Fahrzeugrohbau bei 4 angedeutet ist. Dieser weist einen Ausschnitt auf, in den der Haken 2 eingreift.

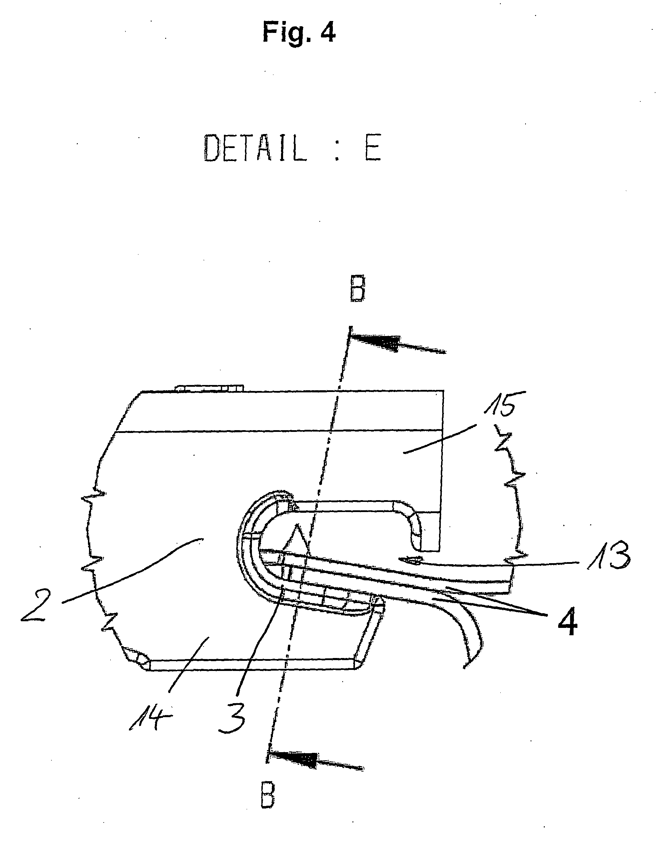

In Figur 4 ist das Zusammenwirken des Hakenmaules mit der Randkante des Ausschnittes der Karosseriestruktur 4 verdeutlicht.

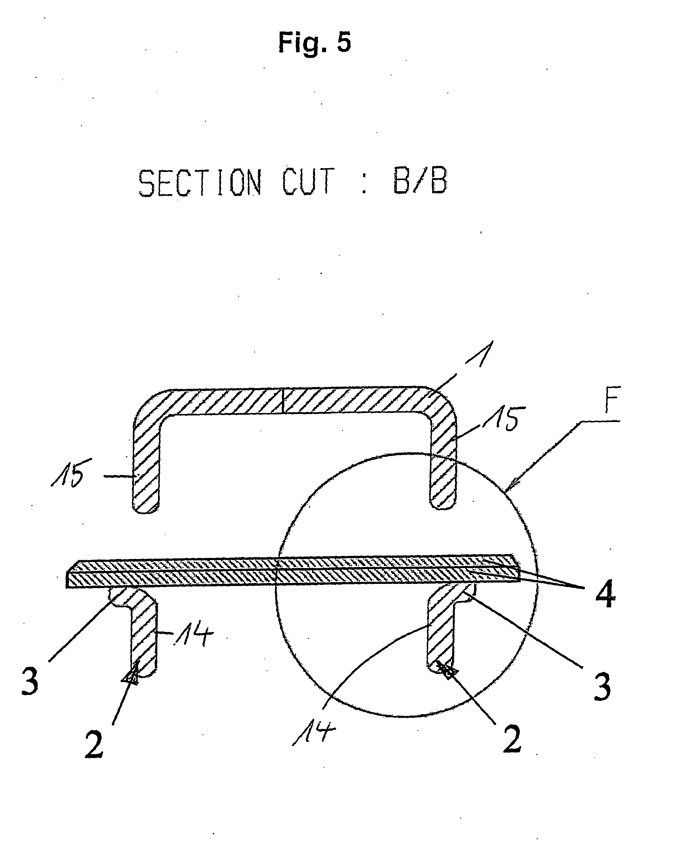

Wie insbesondere in Figur 5 veranschaulicht, ist die Verbreiterung 3 durch eine Abwinklung der Randkante des Hakenmaules des Hakens 2 gebildet, die sich quer zum Hakenmaterial erstreckt. Dabei ragt die Abwinklung über etwa die Materialstärke des Hakenmaterials über die Seitenfläche des Hakens 2 vor. Die Haken 2 sind paarweise angeordnet, so dass die Abwinklungen, die die Verbreiterung 3 bilden, voneinander weg nach außen gerichtet verlaufen.

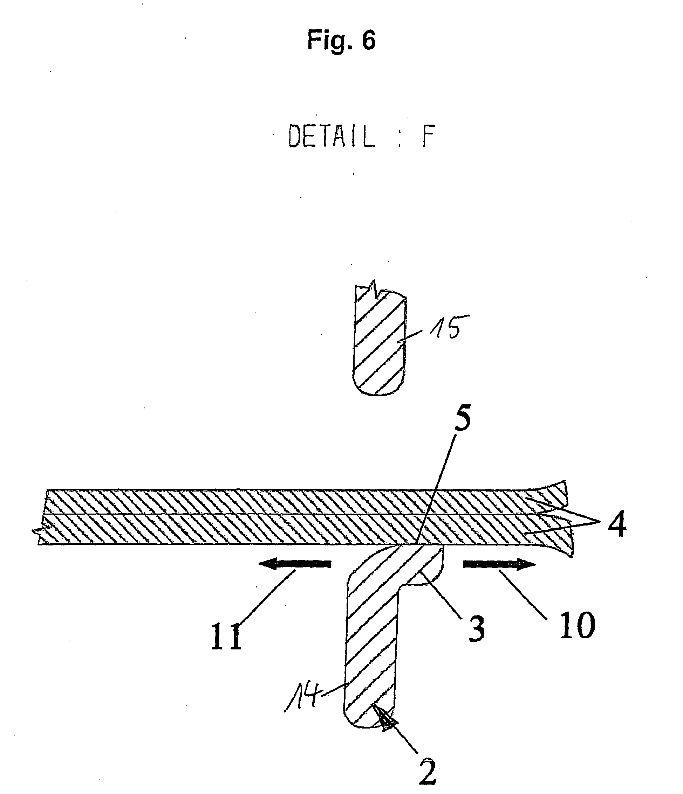

In der Figur 6 ist dieses Detail nochmals vergrößert gezeigt. Bei 10 ist die Abwinklung in der Richtung nach außen angegeben, während durch den Pfeil 11 gezeigt ist, dass die Abwinklung, die die Verbreiterung 3 bildet, auch entgegengerichtet, also nach innen gerichtet sein kann.

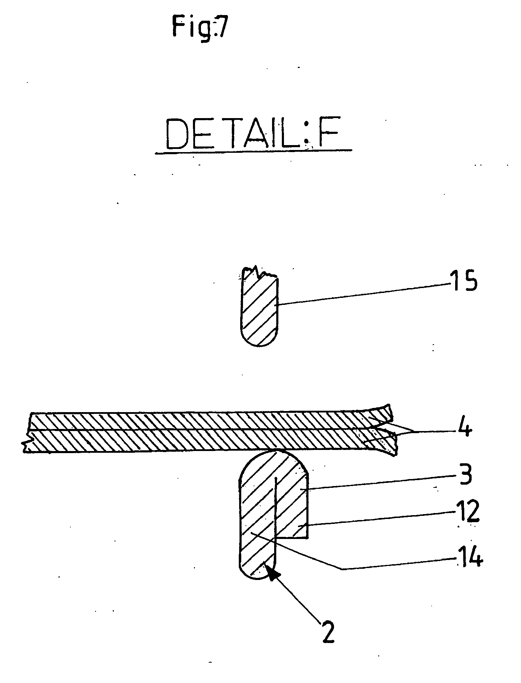

In der Figur 7 ist eine Variante gezeigt, bei der die Verbreiterung 3 durch einen Umschlag 12 der Randkante des Hakenmaules des Hakens 2 um 180° gebildet ist.

In der Zeichnung nicht gezeigt ist eine Ausführungsform, bei der die Verbreiterung durch eine Wulst der Randkante des Hakenmauls des Hakens 2 gebildet ist. Eine solche Wulst sollte dann vorzugsweise eine Dicke haben, die etwa der doppelten Materialstärke des Hakenmaterials entspricht oder auch gering größer als diese ist.

Durch die Verbreiterung 3 wird eine Versteifung des Hakens erreicht, die ein frühzeitiges Verbiegen oder Abscheren des Hakens 2 bei einer Zugbelastung im Crashfall durch die Kraftübertragung in das Karosserieblech 4 vermeidet. Die Verbreiterung 3 erhöht die Kraftaufnahme des Hakens 2 und optimiert die Krafteinleitung der entstehenden Kräfte in den Haken 2. Durch die Verbreiterung 3 wird somit auch ein höheres Widerstandsmoment beim Hakenpaar (2) erzielt, wobei die durch die Verbreiterung gebildete und dem Hakenmaul folgende glatte Angriffsfläche (5) eine Kerbwirkung und somit ein Einreißen des Hakens 2 vermeidet.

Die Erfindung ist nicht auf das Ausführungsbeispiel beschränkt, sondern im Rahmen der Offenbarung vielfach variabel.

## Patentansprüche

1. Führungsschiene (1) für einen Umlenkbeschlag eines Sicherheitsgurtes für Fahrzeuge, wobei die Führungsschiene (1) mindestens einen Haken (2) oder mindestens ein Paar von Haken (2) aufweist, der oder die von der Führungsschiene (1) abragt oder abragen und zur Verhakung in einer Ausnehmung der Fahrzeugkarosserie (4) dient, wobei der Haken (2) ein Hakenmaul (13) aufweist, in welches in Montagesolllage eine Randkante der Ausnehmung eingreift, wobei der Haken (2) oder die Paare von Haken (2) integraler Bestandteil der Führungsschiene (1) oder ein separat an der Schiene (1) befestigtes Teil ist oder sind sowie als Blechformteil oder -Stanzteil ausgebildet ist oder sind,
**dadurch gekennzeichnet, dass** das Hakenmaul (13) an seinem mit der Randkante der Ausnehmung in Eingriff befindlichen Rand gegenüber der Materialstärke des Hakens (2) verbreitert (3) ist, wobei die Verbeiterung (3) durch das Material des Hakens (2) selbst gebildet ist, indem der Bereich des Randes des Hakenmaules (13) zu einer Verbreiterung (3) in diesem Bereich verformt ist.

2. Führungsschiene nach Anspruch 1,
**dadurch gekennzeichnet, dass** das Hakenmaul (13) etwa U-förmig ausgebildet ist, wobei ein erster Schenkel (15) der U-Form in die Führungsschiene (1) übergeht und ein zweiter Schenkel (14) der U-Form von der Führungsschiene (1) beabstandet frei auslaufend endet.

3. Führungsschiene nach Anspruch 1 oder 2,
**dadurch gekennzeichnet, dass** das Hakenmaul (13) die Verbreiterung (3) an seinem der Schiene (1) beabstandeten Rand, im Übergang zu seinem der Schiene (1) nahe liegenden Rand und mindestens in einem daran anschließenden Teilbereich des der Schiene (1) nahe liegenden Randes aufweist.

4. Führungsschiene nach Anspruch 1 oder 2,
**dadurch gekennzeichnet, dass** das Hakenmaul (13) an seinem gesamten Innenrand die Verbreiterung aufweist.

5. Führungsschiene nach einem der Ansprüche 1 bis 5,
**dadurch gekennzeichnet, dass** die Verbreiterung (3) durch eine Abwinklung der Randkante des Hakenmaules (13) gebildet ist, die sich quer zum Hakenmaterial erstreckt.

6. Führungsschiene nach Anspruch 5,
**dadurch gekennzeichnet, dass** die Abwinklung etwa in die Materialstärke des Hakenmaterials über die Seitenfläche des Hakens (2) vorragt.

7. Führungsschiene nach Anspruch 5 oder 6,
**dadurch gekennzeichnet, dass** die Abwinklung über die Außenseite des Hakens (2) vorragt.

8. Führungsschiene nach einem der Ansprüche 1 bis 4,
**dadurch gekennzeichnet, dass** die Verbreiterung (3) durch einen Umschlag (12) der Randkante des Hakenmauls (13) um 180° gebildet ist.

9. Führungsschiene nach einem der Ansprüche 1 bis 4,
**dadurch gekennzeichnet, dass** die Verbreiterung (3) durch eine Wulst der Randkante des Hakenmauls (13) gebildet ist.

10. Führungsschiene nach Anspruch 9,
**dadurch gekennzeichnet, dass** die Wulst eine Dicke hat, die gleich der doppelten Materialstärke des Hakenmaterials oder größer als diese ist.

## Claims

1. A guide rail (1) for a deflection fitting of a safety belt for vehicles, wherein the guide rail (1) comprises at least one hook (2) or at least one pair of hooks (2), which projects or project from the guide rail (1) and serves or serve for hooking in a recess in the vehicle body (4), wherein the hook (2) has a hook mouth (13), into which in the desired mounting position a peripheral edge of the recess engages, wherein the hook (2) or the pairs of hooks (2) is or are an integral part of the guide rail (1) or a part separately fixed at the rail (1) and is or are formed as a shaped sheet metal part or a stamped sheet metal part, **characterized in that** the hook mouth (13) is widened (3) at its edge being in engagement with the peripheral edge of the recess with respect to the material thickness of the hook (2), the widening (3) being formed by the material of the hook (2) itself, by that the region of the edge of the hook mouth (13) is deformed so to create a widening (3) in this region.

2. The guide rail according to claim 1, **characterized in that** the hook mouth (13) is approximately U-shaped, a first leg (15) of the U-shape merging into the guide rail (1) and a second leg (14) of the U-shape terminating spaced from the guide rail (1) toward a free end.

3. The guide rail according to claim 1 or 2, **characterized in that** the hook mouth (13) comprises the widening (3) at its edge spaced from the rail (1), in the transition to its edge close to the rail (1) and at least in an adjoining portion of the edge close to the rail (1).

4. The guide rail according to claim 1 or 2, **characterized in that** the hook mouth (13) comprises the widening on its entire inner edge.

5. The guide rail according to one of claims 1 to 4, **characterized in that** the widening (3) is formed by an angled portion of the peripheral edge of the hook mouth (13), said angled portion extending transversely to the hook material.

6. The guide rail according to claim 5, **characterized in that** the angled portion projects approximately in the material thickness of the hook material beyond the side surface of the hook (2).

7. The guide rail according to claim 5 or 6, **characterized in that** the angled portion projects beyond the outer side of the hook (2).

8. The guide rail according to one of claims 1 to 4, **characterized in that** the widening (3) is formed by a portion (12) of the peripheral edge of the hook mouth (13) folded by 180°.

9. The guide rail according to one of claims 1 to 4, **characterized in that** the widening (3) is formed by a bead of the peripheral edge of the hook mouth (13).

10. The guide rail according to claim 9, **characterized in that** the bead has a thickness that is equal to twice the material thickness of the hook material or is greater than this.

## Revendications

1. Rail de guidage (1) pour une monture de renvoi d'une ceinture de sécurité pour véhicules, dans lequel le rail de guidage (1) comprend au moins un crochet (2) ou au moins une paire de crochets (2), qui saille ou saillent au-delà du rail de guidage (1) et serve ou servent d'accrochage dans un évidement du corps (4) du véhicule, dans lequel le crochet (2) a une gueule (13) du crochet, dans laquelle dans la position de montage de consigne, une arête de bord de l'évidement s'engrène, dans lequel le crochet (2) ou les paires de crochets (2) est ou sont une partie intégrée du rail de guidage (1) ou une partie fixée séparément au rail (1) et est ou sont configurée ou configurées comme pièce usinée en tôle préformée ou pièce usinée en tôle estampée, **caractérisé en ce que** la gueule (13) du crochet est élargie à son bord en prise avec l'arête de bord de l'évidement par rapport à l'épaisseur de matériel du crochet (2), l'élargissement (3) étant réalisé par le matériel du crochet (2) lui-même, par ce que la région du bord de la gueule (13) du crochet est déformée pour créer un élargissement (3) dans cette région.

2. Rail de guidage selon la revendication 1, **caractérisé en ce que** la gueule (13) du crochet est réalisée environ en forme d'U, une première branche (15) de la forme d'U se continuant dans le rail de guidage (1) et une deuxième branche (14) de la forme d'U se terminant à distance du rail de guidage (1) vers une extrémité libre.

3. Rail de guidage selon la revendication 1 ou 2, **caractérisé en ce que** la gueule (13) du crochet comprend l'élargissement (3) à son bord à distance du rail (1), dans la jonction avec son bord voisin du rail (1) et au moins dans une partie suivante du bord voisin du rail (1).

4. Rail de guidage selon la revendication 1 ou 2, **caractérisé en ce que** la gueule (13) du crochet comprend un élargissement sur son bord intérieur entier.

5. Rail de guidage selon une des revendications 1 à 4, **caractérisé en ce que** l'élargissement (3) est réalisé par un repli de l'arête de bord de la gueule (13) du crochet, ce repli s'étendant transversalement au matériel du crochet.

6. Rail de guidage selon la revendication 5, **caractérisé en ce que** le repli fait saillie environ dans l'épaisseur du matériel du crochet au-delà de la face latérale du crochet (2).

7. Rail de guidage selon la revendication 5 ou 6, **caractérisé en ce que** le repli fait saillie au-delà du côté extérieur du crochet (2).

8. Rail de guidage selon une des revendications 1 à 4, **caractérisé en ce que** l'élargissement (3) est réalisé par un repli (12) par 180° de l'arête de bord de la gueule (13) du crochet.

9. Rail de guidage selon une des revendications 1 à 4, **caractérisé en ce que** l'élargissement (3) est réalisé par un renflement de l'arête de bord de la gueule (13) du crochet.

10. Rail de guidage selon la revendication 9, **caractérisé en ce que** le renflement a une épaisseur qui est égale à deux fois l'épaisseur de matériel du crochet ou est supérieure de celle-ci.
